# EUROPÄISCHE PATENTSCHRIFT

(11) **EP 1 876 159 B1**
(45) Veröffentlichungstag und Bekanntmachung des Hinweises auf die Patenterteilung: **21.03.2018**
(21) Anmeldenummer: 07111201.5
(22) Anmeldetag: 27.06.2007
(51) Int. Cl.: C04B 35/565, C04B 111/00, C04B 38/00, C04B 35/83, F16D 69/02

(54) **VERFAHREN ZUR HERSTELLUNG EINES CARBIDKERAMISCHEN KONTAKTKÖRPERS UND CARBIDKERAMISCHER KONTAKTKÖRPER**
METHOD FOR MANUFACTURING A CARBIDE CERAMIC CONTACT BODY AND CARBIDE CERAMIC CONTACT BODY
PROCÉDÉ DESTINÉ À LA FABRICATION DE CORPS DE CONTACT EN CÉRAMIQUE DE CARBURE ET CORPS DE CONTACT EN CÉRAMIQUE DE CARBURE

(30) Priorität: 03.07.2006 DE 102006031578; 22.09.2006 DE 102006044848
(43) Veröffentlichungstag der Anmeldung: 09.01.2008
(73) Patentinhaber: Deutsches Zentrum für Luft- und Raumfahrt e.V., 51147 Köln (DE)
(72) Erfinder: Dr. Schmidt, Jens, 95445 Bayreuth (DE); Seiz, Susanne, 71384, Weinstadt (DE)
(74) Vertreter: Hoeger, Stellrecht & Partner Patentanwälte mbB

(56) Entgegenhaltungen:
- WO-A2-2004/022507
- US-A- 5 610 110
- US-A1- 2003 180 527
- TJONG S C ET AL: "Tribological behaviour of SiC particle-reinforced copper matrix composites" MATERIALS LETTERS, NORTH HOLLAND PUBLISHING COMPANY. AMSTERDAM, NL, Bd. 43, Nr. 5-6, Mai 2000 (2000-05), Seiten 274-280, XP004256432 ISSN: 0167-577X
- GREIL P ET AL: "Biomorphic Cellular Silicon Carbide Ceramics from Wood: I. Processing and Microstructure" JOURNAL OF THE EUROPEAN CERAMIC SOCIETY, ELSEVIER SCIENCE PUBLISHERS, BARKING, ESSEX, GB, Bd. 18, Nr. 14, Dezember 1998 (1998-12), Seiten 1961-1973, XP004144406 ISSN: 0955-2219

## Beschreibung

Die Erfindung betrifft ein Verfahren zur Herstellung eines carbidkeramischen Kontaktkörpers, welcher eine Kontaktoberfläche aufweist, bei welchem ein Vorkörper hergestellt wird, aus dem Vorkörper durch Pyrolyse und/oder Graphitierung ein offenporöser Kohlenstoffkörper hergestellt wird und der Kohlenstoffkörper durch Carbidbildnerinfiltration keramisiert wird.

Die Erfindung betrifft ferner einen carbidkeramischen Kontaktkörper.

Carbidkeramische Kontaktkörper werden beispielsweise als Reibkörper oder Gleitkörper eingesetzt. Reibkörper wiederum finden beispielsweise Verwendung in Bremsen wie Aufzugsbremsen. Gleitkörper können Verwendung finden beispielsweise in Gleitlagern.

Aus der DE 100 45 881 A1 ist eine Sicherheitseinrichtung für einen Aufzug bekannt, welche ein Bremsteil umfasst, das mindestens einen Reibkörper mit mindestens einer Reibfläche aufweist. Der Reibkörper weist als Reibwerkstoff einen faserverstärkten keramischen Verbundwerkstoff auf, der Siliciumcarbid und als Verstärkungskomponente Kohlenstofffasern enthält.

Aus der EP 1 493 723 A1 ist ein Verfahren zur Herstellung von Strukturkeramiken und/oder Funktionskeramiken aus Silciumcarbidkeramik bekannt, bei welchem aus einem cellulosehaltigen Werkstoff ein poröser Vorkörper hergestellt wird, der poröse Vorkörper mittels Pyrolyse in einen offenporösen Kohlenstoffkörper umgewandelt wird und der offenporöse Kohlenstoffkörper durch Infiltration von Silicium umfassenden Materialien in eine Silicium umfassende Carbidkeramik, insbesondere Siliciumcarbidkeramik umgewandelt wird. Zur Herstellung des Vorkörpers wird als Ausgangsbestandteil mindestens cellulosehaltiges Pulver verwendet.

Aus der EP 1 634 860 A2 ist ein Verfahren zur Herstellung eines Carbidkeramikmaterials bekannt, bei welchem aus einem Ausgangsmaterial, welches cellulosehaltiges Pulver umfasst, ein poröser Vorkörper hergestellt wird, der Vorkörper durch Pyrolyse in einen offenporösen Kohlenstoffkörper umgewandelt wird und der Kohlenstoffkörper durch Infiltration von Silicium umfassenden Materialien in eine Silicium umfassende Carbidkeramik umgewandelt wird. Zur Herstellung des Ausgangsmaterials werden Kohlenstoff-Kurzfasern verwendet.

Aus der EP 1 657 227 A1 ist ein Verfahren zur Herstellung eines Carbidkeramikmaterials mit definiertem gradierten Phasenverteilungsprofil bekannt, bei welchem aus einem Ausgangsmaterial, welches cellulosehaltiges Pulver umfasst, ein poröser Vorkörper hergestellt wird, der Vorkörper durch Pyrolyse in einen offenporösen Kohlenstoffkörper umgewandelt wird und der Kohlenstoffkörper durch Infiltration von Silicium umfassenden Materialien in eine Silicium umfassende Carbidkeramik umgewandelt wird. Der Vorkörper wird mit einem definierten gradierten Dichteprofil hergestellt.

Aus der US 5,610,110 sind poröse Siliciumcarbidartikel bekannt, welche ein Gesamtporenvolumen zwischen 4 % bis 18 % aufweisen, wobei die Poren im Wesentlichen sphärisch sind, geschlossen sind und einen durchschnittlichen Durchmesser zwischen 50 und 200 µm haben.

Aus der WO 2004/022507 A2 sind gesinterte Siliciumcarbidkörper mit Porosität von 2 bis 12 Vol.-% bekannt, wobei die Porosität aus nicht zusammenhängenden, geschlossenen Poren besteht, die gleichmäßig im Werkstoff der Körper verteilt sind. Die Poren sind kugelförmig und weisen einen Innendurchmesser von 10 µm bis 48 µm auf.

Aus der US 2003/0180527 A1 ist ein Kompositmaterial bekannt, welches Verstärkungsfasern enthält. Die Verstärkungsfasern enthalten Kohlenstoff und eine Matrix umfasst Siliciumcarbid, Silicium und Kupfer. Der Massenanteil von Kupfer beträgt bis zu 55 %, wobei die Verstärkungsfasern beschichtet sind.

In dem Artikel "Tribological behavious of SiC particle-reinforced copper matrix composites" von S.C. Tjong und K.C. Lau, Materials Letters 43 (2000) 274 - 280 ist die Verstärkung von Kupferbauteilen mit SiC-Partikeln beschrieben.

In dem Artikel "Biomorphic Cellular Silicon Carbide Ceramics from Wood: I. Processing and Microstructure" von P. Greil et al., Journal of the European Ceramic Society 18 (1998), Seiten 1961 - 1973 ist das Bearbeiten von zellulären Keramiken mit anisotropen Porenstrukturen durch Infiltration von flüssigem Silicium in carbonisiertes Holz und nachfolgende Reaktion zu SiC beschrieben.

Der Erfindung liegt die Aufgabe zugrunde, ein Verfahren der eingangs genannten Art bereitzustellen, mittels welchem sich ein carbidkeramischer Kontaktkörper mit vorteilhaften Eigenschaften herstellen lässt.

Diese Aufgabe wird bei dem eingangs genannten Verfahren erfindungsgemäß dadurch gelöst, dass ein Ausgangsmaterial für den Vorkörper ein Bindemittel umfasst und der Bindemittelanteil im Ausgangsmaterial für den Vorkörper größer 5 % ist, dass das Ausgangsmaterial mindestens bereichsweise einen Porenbildner umfasst, dass der Vorkörper so hergestellt wird, dass er in einem oberflächennahen Bereich, an welchem die Kontaktoberfläche gebildet wird, geschlossene Poren aufweist, die bei der Pyrolyse erhalten bleiben und die nicht durch Carbidbildner infiltrierbar sind, und dass eine mechanische Bearbeitung eines hergestellten Kontaktkörpers im Bereich der geschlossenen Poren zur Herstellung der Kontaktoberfläche erfolgt, wobei Poren freigelegt werden.

Es lässt sich dadurch eine Vorstufe eines carbidkeramischen Kontaktkörpers herstellen, welcher geschlossene Poren in einem oberflächennahen Bereich aufweist. Durch mechanische Bearbeitung lassen sich diese Poren freilegen, wobei eine Kontaktoberfläche wie beispielsweise eine Reiboberfläche bereitstellbar ist, welche einen hohen Reibwert bei geringem Verschleiß aufweist. Insbesondere lässt sich eine Kontaktoberfläche mit muldenförmigen Vertiefungen herstellen, wobei diese Vertiefungen tribologisch vorteilhaft sind. Die Vertiefungen können Rückstände wie Abrieb und Schmutzpartikel aufnehmen, um die Kontaktoberfläche sauber zu halten. Sie können auch definiert mit einem Funktionsmedium wie einem Gleitmedium und/oder Korrosionsschutzmedium befüllt werden.

Weiterhin lässt sich eine Kontaktoberfläche mit hohem Keramikanteil herstellen.

Ganz besonders vorteilhaft ist es, wenn die geschlossenen Poren in dem Vorkörper in einer Bindemittelmatrix eingeschlossen sind. Dadurch lässt sich gewährleisten, dass die Poren auch bei der Pyrolyse/Graphitierung und bei der Carbidbildnerinfiltration geschlossen bleiben.

Günstig ist es insbesondere, wenn die geschlossenen Poren eine Größe zwischen 10 µm und 5 mm aufweisen. Dadurch lässt sich ein Kontaktkörper mit einer Kontaktoberfläche herstellen, welche einen hohen Reibwert mit geringem Verschleiß aufweist.

Es ist insbesondere vorgesehen, dass der Vorkörper durch Warmpressen oder Spritzgießen eines Ausgangsmaterials hergestellt wird. Dadurch lässt sich dieser endkonturnah bezogen auf den herzustellenden carbidkeramischen Kontaktkörper herstellen.

Bei einer Ausführungsform umfasst ein Ausgangsmaterial für den Vorkörper cellulosehaltiges Material und insbesondere cellulosehaltiges Pulver. Der Vorkörper lässt sich dadurch auf einfache und kostengünstige Weise herstellen. Ferner lässt sich über die Verwendung von feuchtem cellulosehaltigem Pulver auf einfache Weise eine geschlossene Porosität ausbilden.

Günstigerweise umfasst das Ausgangsmaterial ein Bindemittel, wobei das Bindemittel vorzugsweise ein Harz und insbesondere Phenolharz ist. Durch Aushärtung des Bindemittels unter Wärmebeaufschlagung lässt sich ein Vorkörper herstellen.

Es kann vorgesehen sein, dass das Ausgangsmaterial Fasern umfasst. Dadurch lässt sich ein schadenstoleranter Kontaktkörper herstellen. Durch einen entsprechenden Faseranteil (beispielsweise von C-Fasern) lässt sich die Schadenstoleranz erhöhen.

Es ist insbesondere vorgesehen, dass der Faseranteil (im Ausgangsmaterial und dann auch im hergestellten Kontaktkörper) größer als 20 Volumen-% ist und insbesondere größer als 30 Volumen-% ist. Vorteilhafterweise ist der Faseranteil größer als 40 Volumen-%. Es hat sich beispielsweise als günstig erwiesen, wenn der Faseranteil (insbesondere von C-Fasern) bei ca. 50 Volumen-% liegt.

Es ist ferner günstig, wenn der Faseranteil von der Kontaktoberfläche weg zum Inneren des Bauteils ansteigt. Dadurch ist die Oxidationsgefahr im Reibbereich an der Kontaktoberfläche gering. Insbesondere steigt der Faseranteil sukzessive an.

Es ist vorgesehen, dass das Ausgangsmaterial mindestens bereichsweise einen Porenbildner und insbesondere einen organischen Porenbildner umfasst. Dieser Porenbildner, welcher sich zersetzen kann, stellt bei der Zersetzung ein Gas bereit, über welches die geschlossenen Poren ausbildbar sind. Dem Ausgangsmaterial wird Porenbildner mindestens bereichsweise zugemischt; das Ausgangsmaterial enthält, wenn es in eine entsprechende Form wie beispielsweise eine Warmpressform eingelegt ist, in einem oberflächennahen Bereich einen höheren Anteil an Porenbildner als außerhalb des oberflächennahen Bereichs.

Insbesondere wird der Porenbildner so gewählt, dass er sich während einer Topfzeit (solange das Bindemittel noch nicht ausgehärtet ist) bei der Herstellung des Vorkörpers zersetzt. Dadurch lassen sich die geschlossenen Poren herstellen.

Bei einer weiteren Ausführungsform weist das cellulosehaltige Pulver im Ausgangsmaterial mindestens bereichsweise einen Feuchtegehalt größer 5 % auf.

Durch das adsorptiv gebundene Wasser lassen sich Poren herstellen. Bei Aufheizung desorbiert das Wasser und aufgrund des steigenden Dampfdrucks bei steigender Temperatur wird das sich ausdehnende Gas (Wasserdampf) in der umgebenden viskosen Bindemittelmatrix eingeschlossen und es kommt zur Bildung geschlossener Poren. Das cellulosehaltige Pulver weist mindestens bereichsweise einen Feuchtegehalt größer 5 % auf. Insbesondere wird das Ausgangsmaterial schichtweise in eine Form wie beispielsweise eine Warmpressform eingelegt, wobei in einer oberflächennahen Schicht der Feuchtegehalt größer 5 % ist und außerhalb des oberflächennahen Bereichs das Ausgangsmaterial nicht befeuchtet ist.

Der Feuchtegehalt wird dabei beispielsweise durch Trocknen von angefeuchtetem cellulosehaltigem Pulver oder einem angefeuchteten Gemisch, welches cellulosehaltiges Pulver enthält, eingestellt. Bei entsprechender Verfahrensführung lässt sich der Feuchtegehalt definiert einstellen. Je nach Feuchtegehalt lässt sich die Porosität bezüglich Größe und/oder Verteilung der geschlossenen Poren einstellen.

Ganz besonders vorteilhaft ist es, wenn der Vorkörper so hergestellt wird, dass die Porenbildung und insbesondere Gasbildung zur Herstellung der geschlossenen Poren zwischen einer Erweichungstemperatur und einer Aushärtetemperatur des Bindemittels erfolgt. Dadurch lässt sich garantieren, dass geschlossene Poren hergestellt werden.

Der Bindemittelanteil im Ausgangsmaterial für den Vorkörper ist größer 5 %. Dadurch lässt es sich sicherstellen, dass geschlossene Poren von einer Bindemittelmatrix umgeben sind. Dadurch lässt es sich gewährleisten, dass die geschlossenen Poren auch bei der Pyrolyse/Graphitierung erhalten bleiben.

Insbesondere liegt der Bindemittelanteil zwischen 20 % und 30 %, um einen optimierten Kontaktkörper herstellen zu können.

Ganz besonders vorteilhaft ist es, wenn der Vorkörper mit gradiertem Dichteprofil hergestellt wird. Ein Verfahren zur Herstellung eines Vorkörpers mit einem definierten gradierten Dichteprofil ist in der EP 1 657 227 A1 beschrieben, auf die ausdrücklich Bezug genommen wird. Über die Herstellung mit einem gradierten Dichteprofil lässt sich ein gradierter Keramikanteil in dem Kontaktkörper herstellen. Insbesondere lässt sich der Kontaktkörper so herstellen, dass er in einem oberflächennahen Bereich einen erhöhten Keramikanteil aufweist.

Es ist insbesondere vorgesehen, dass zur Herstellung des Vorkörpers Ausgangsmaterial geschichtet wird, wobei das Ausgangsmaterial in einem oberflächennahen Bereich zur Ausbildung geschlossener Poren behandelt ist. Beispielsweise enthält das Ausgangsmaterial in dem oberflächennahen Bereich Porenbildner oder es ist angefeuchtet. Dadurch lässt sich gezielt die Ausbildung geschlossener Poren in einer oberflächennahen Schicht des Vorkörpers einstellen.

Es ist insbesondere vorgesehen, dass das Dichteprofil so gewählt wird, dass die Kohlenstoffdichte nach der Pyrolyse in einem oberflächennahen Bereich bezogen auf die spätere Kontaktoberfläche größer ist als in einem Kernbereich. Dadurch lässt sich der Keramikanteil in dem oberflächennahen Bereich erhöhen, um so eine Kontaktoberfläche mit hohem Reibwert und geringem Verschleiß zu erhalten.

Es ist dabei insbesondere vorgesehen, dass der Vorkörper mit geschlossenen Poren und offenen Poren in dem oberflächennahen Bereich hergestellt wird. Durch die offene Porosität lässt sich später eine Keramisierung auf einfache Weise durchführen.

Insbesondere beträgt die geschlossene Porosität in dem oberflächennahen Bereich des Vorkörpers zwischen 5 Flächen-% und 60 Flächen-%, um einen optimierten Kontaktkörper herzustellen.

Bei einer Ausführungsform wird eine Carbidbildnerinfiltration mit Silicium durchgeführt. Dadurch wird ein Kontaktkörper hergestellt, welcher eine Siliciumcarbidphase aufweist. Es kann auch eine Siliciumphase von reinem Silicium vorliegen, welche aus dem Silicium besteht, welches nicht mit Kohlenstoff reagiert hat.

Ganz besonders vorteilhaft ist es, wenn Kupfer als Bestandteil des Infiltrationsmaterials verwendet wird. Es lässt sich dadurch eine duktile Kupferphase herstellen, die zu vorteilhaften Eigenschaften des Kontaktkörpers führt. Insbesondere ist dieser im Ganzen weniger spröde und weniger hart.

Beispielsweise erfolgt eine Carbidbildnerinfiltration über eine Metallschmelze. Der Kupferanteil in einer Ausgangslegierung für die Infiltration beträgt dabei mindestens 15 Massen-% insbesondere für Reibkörperanwendungen.

Es erfolgt eine mechanische Bearbeitung eines hergestellten Kontaktkörpers im Bereich der geschlossenen Poren zur Herstellung der Kontaktoberfläche. Die Bearbeitung erfolgt dabei derart, dass die geschlossenen Poren freigelegt werden. Dadurch erhält man eine Kontaktoberfläche mit hohem Reibwert.

Der Erfindung liegt ferner die Aufgabe zugrunde, einen carbidkeramischen Kontaktkörper mit hohem Reibwert und geringem Verschleiß bereitzustellen.

Diese Aufgabe wird erfindungsgemäß dadurch gelöst, dass der carbidkeramische Kontaktkörper eine carbidkeramische Oberflächenschicht umfasst, einen Kernbereich umfasst, und eine Kupferphase umfasst, wobei der Keramikanteil in der Oberflächenschicht größer ist als in dem Kernbereich, der Kupferanteil in dem Kernbereich größer ist als in der Oberflächenschicht und die carbidkeramische Oberflächenschicht durch mechanische Bearbeitung einer carbidkeramischen Oberflächenschicht mit geschlossenen Poren hergestellt ist, wobei Vertiefungen an einer Kontaktoberfläche vorliegen.

Ein solcher carbidkeramischer Kontaktkörper weist vorteilhafte tribologische Eigenschaften auf.

Der carbidkeramische Kontaktkörper weist die bereits im Zusammenhang mit dem erfindungsgemäßen Verfahren erläuterten Vorteile auf.

Durch die Freilegung der geschlossenen Poren weist der carbidkeramische Kontaktkörper eine Kontaktoberfläche mit Vertiefungen auf.

Der carbidkeramische Kontaktkörper umfasst eine Kupferphase. Die Kupferphase ist duktil. Der carbidkeramische Kontaktkörper ist dadurch im Ganzen weniger spröde und hart, wobei er an der Oberflächenschicht eine hohe Härte aufweist.

Der carbidkeramische Kontaktkörper weist einen Kernbereich außerhalb der Oberflächenschicht auf, welcher einen geringeren Keramikanteil aufweist als die Oberflächenschicht. Der Kontaktkörper als Ganzes ist dadurch weniger spröde und hart.

Aus dem gleichen Grund ist es günstig, wenn ein Kupferanteil im Kernbereich größer ist als in der Oberflächenschicht. Die Kupferphase im carbidkeramischen Kontaktkörper ist duktil. Der carbidkeramische Kontaktkörper ist dadurch als Ganzes weniger spröde und hart und damit schadenstoleranter, wobei eine harte und verschleißfeste Oberflächenschicht bereitgestellt wird, welche günstig für tribologische Anwendungen ist.

Vorteilhafterweise weist der carbidkeramische Kontaktkörper einen Faseranteil auf.

Es ist dann ebenfalls günstig, wenn ein Faseranteil im Kernbereich größer ist als in der Oberflächenschicht.

Es ist dabei günstig, wenn der Faseranteil von der Oberflächenschicht zum Kernbereich hin sukzessive ansteigt. Dadurch erhält man ein schadenstolerantes Verhalten, wobei die Oxidationsgefahr im Reibbereich (an der Oberflächenschicht) verringert ist.

Günstig ist es, wenn keine Fasern und/oder kein Kohlenstoff an der Oberfläche des carbidkeramischen Kontaktkörpers vorliegen. Damit kann auch bei thermischer Belastung des Kontaktkörpers keine Oxidation (an der Oberfläche) stattfinden.

Es ist günstig, wenn ein Faseranteil im carbidkeramischen Kontaktkörper mindestens 20 Volumen-% beträgt. Vorteilhafterweise beträgt der Faseranteil mindestens 30 Volumen-% und besonders vorteilhafterweise mindestens 50 Volumen-%. Es hat sich gezeigt, dass sich ideale Verhältnisse bei einem Faseranteil von ca. 50 Volumen-% erhalten lassen.

Insbesondere weist der carbidkeramische Kontaktkörper Vertiefungen an einer Kontaktoberfläche auf. Diese Vertiefungen, die insbesondere muldenförmig sind, sind durch die Freilegung der geschlossenen Poren entstanden. Die Vertiefungen können beispielsweise Abrieb bei einem Reibkörper aufnehmen, so dass sich verbesserte Reibungseigenschaften ergeben. Sie können auch Schmutzteile usw. aufnehmen.

Bei einer Ausführungsform ist es vorgesehen, dass in den Vertiefungen des carbidkeramischen Kontaktkörpers ein Funktionsmedium angeordnet ist. Bei dem Funktionsmedium kann es sich beispielsweise um ein Gleitmedium handeln, welches Gleiteigenschaften verbessert. Es ist beispielsweise alternativ oder zusätzlich auch möglich, dass ein Korrosionsschutzmedium in Vertiefungen angeordnet ist.

Wenn Silicium als Carbidbildner eingesetzt wird, dann ist der carbidkeramische Kontaktkörper ein SiC-Si-Cu-C-Verbundkeramikkörper. Er umfasst eine SiC-Phase, eine Si-Phase aus nicht reagiertem Silicium, eine Kupferphase und eine Kohlenstoffphase aus nicht keramisiertem Kohlenstoff. Wenn das Ausgangsmaterial ein cellulosehaltiges Pulver ist, dann ist diese Verbundkeramik biomorph.

Es ist insbesondere vorteilhaft, wenn der carbidkeramische Kontaktkörper eine Kupferphase mit einem Volumenanteil aufweist, welcher zwischen 10 % und 40 % liegt (einschließlich der Grenzen), eine Siliciumphase mit einem Volumenanteil von 30 % bis 55 % aufweist (einschließlich der Grenzen), eine Siliciumcarbidphase mit einem Volumenanteil zwischen 5 % und 25 % aufweist (einschließlich der Grenzen) und eine Kohlenstoffphase mit einem Volumenanteil von 5 % bis 15 % (einschließlich der Grenzen) aufweist. Dadurch erhält man einen Kontaktkörper mit optimierten Eigenschaften.

Insbesondere sind die Siliciumcarbidanteile an einer Oberfläche größer als zur Kontaktkörpermitte hin; die carbidkeramische Phase ist reibwirksam. Zur Kontaktkörpermitte hin ist es günstig, wenn die Kupferphase, welche duktil ist, einen höheren Anteil aufweist.

Die oben genannten Mengenangaben sind insbesondere bezogen auf eine Ausgangslegierung, mittels welcher die Carbidbildung durchgeführt wird, welche eine Kupferanteil zwischen 25 Massen-% und 75 Massen-% (einschließlich der Grenzen) aufweist.

Insbesondere ist dabei ein Faseranteil im Kernbereich größer als in der Oberflächenschicht, um bei vorteilhaften Gesamteigenschaften des Körpers einen tribologisch vorteilhaften Oberflächenbereich zu erhalten.

Der carbidkeramische Kontaktkörper ist insbesondere als Reibkörper für eine Reibungsanwendung oder Gleitkörper für eine Gleitanwendung ausgestaltet.

Die nachfolgende Beschreibung bevorzugter Ausführungsformen dient im Zusammenhang mit der Zeichnung der näheren Erläuterung der Erfindung. Es zeigen:
- Figur 1: eine schematische Darstellung eines Ausführungsbeispiels eines erfindungsgemäßen Vorkörpers in Schnittansicht;
- Figur 2: eine schematische Darstellung eines Ausführungsbeispiels eines erfindungsgemäßen carbidkeramischen Kontaktkörpers in Schnittansicht;
- Figur 3: einen Anschliff einer Kontaktoberfläche eines erfindungsgemäßen carbidkeramischen Kontaktkörpers im Auflichtmikroskop mit 40-facher Vergrößerung, wobei die angegebene Größenskala 500 µm ist;
- Figur 4: eine rasterelektronenmikroskopische Aufnahme eines Anschliffs einer Kontaktoberfläche eines weiteren Ausführungsbeispiels eines erfindungsgemäßen carbidkeramischen Kontaktkörpers mit 2000-facher Vergrößerung; und
- Figur 5: eine Diffraktometeraufnahme einer Kontaktoberflächenschicht eines Ausführungsbeispiels eines erfindungsgemäßen carbidkeramischen Kontaktkörpers.

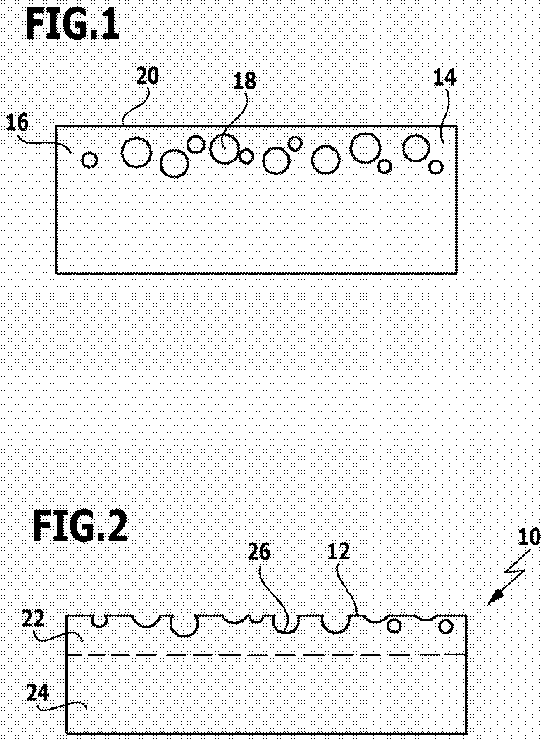

Ein erfindungsgemäßer Kontaktkörper, welcher in schematischer Darstellung in Schnittansicht in Figur 2 gezeigt und dort mit 10 bezeichnet ist, ist aus einem carbidkeramischen Material hergestellt. Er weist eine Kontaktoberfläche 12 auf. Der Kontaktkörper 10 dient beispielsweise als Reibkörper. Entsprechend ist die Kontaktoberfläche 12 eine Reibfläche.

Solche Reibkörper werden beispielsweise bei Aufzugbremsen eingesetzt. In der DE 100 45 881 A1 ist eine Sicherheitseinrichtung für einen Aufzug mit einem Bremsteil beschrieben, das mindestens einen Reibkörper mit einer Reibfläche aufweist. Der Kontaktkörper 10 lässt sich als Reibkörper einsetzen.

Bei einer weiteren Ausführungsform ist der Kontaktkörper 10 ein Gleitkörper und die Kontaktoberfläche 12 ist dann entsprechend eine Gleitfläche. Ein Gegenstück ist an diesem Gleitkörper insbesondere reibend geführt.

Der carbidkeramische Kontaktkörper 10 wird aus einem Vorkörper 14 hergestellt (Figur 1).

Der Vorkörper 14 wird aus einem Ausgangsmaterial hergestellt, welches ein Gemisch aus einem kohlenstoffhaltigen Material und einem Bindemittel ist. Das kohlenstoffhaltige Material ist insbesondere ein cellulosehaltiges Material und insbesondere ein cellulosehaltiges Pulver (Holzpulver). Dadurch ist der hergestellte Kontaktkörper 10 ein biomorpher carbidkeramischer Kontaktkörper.

Das Ausgangsmaterial kann weitere Bestandteile umfassen wie beispielsweise Fasern.

In der EP 1 634 860 A2 ist ein Verfahren zur Herstellung eines Carbidkeramikmaterials beschrieben, bei dem zur Herstellung des Ausgangsmaterials Kohlenstoff-Kurzfasern verwendet werden. Auf diese Druckschrift wird ausdrücklich Bezug genommen.

Als weitere Additive können beispielsweise Porenbildner vorgesehen sein, wie unten noch näher beschrieben.

Bei dem Bindemittel handelt es sich insbesondere um ein Harz und insbesondere um ein Phenolharz.

Der Vorkörper 14 wird aus dem Ausgangsmaterial über Aushärtung des Bindemittels hergestellt. Beispielsweise wird der Vorkörper 14 durch Spritzgießen oder mittels Warmpressen hergestellt. Bei der Warmpressung wird das Ausgangsmaterial in ein Gesenk gebracht.

Erfindungsgemäß ist es vorgesehen, dass der Vorkörper 14 so hergestellt wird, dass er in einem oberflächennahen Bereich 16 geschlossene Poren 18 aufweist. Der oberflächennahe Bereich 16 ist ein Bereich des Vorkörpers 14, an dem später (nach Pyrolyse und Keramisierung) die Kontaktoberfläche 12 hergestellt wird.

Die geschlossenen Poren 18 werden so hergestellt, dass sie von Bindemittelmaterial umgeben sind und während der Pyrolyse nicht "aufgebrochen" werden. Sie können dann bei der Carbidbildnerinfiltration eines durch die Pyrolyse hergestellten Kohlenstoffkörpers nicht mit Carbidbildner in Kontakt kommen, d. h. sie bleiben während des ganzen Herstellungsverfahrens geschlossen.

Bei einer Ausführungsform werden die geschlossenen Poren 18 dadurch hergestellt, dass dem (trockenen) Ausgangsmaterial ein organischer Porenbildner zugemischt wird. Der Porenbildner ist so ausgewählt, dass er sich innerhalb der Topfzeit des Ausgangsmaterials bei der Herstellung des Vorkörpers 14 (insbesondere beim Pressvorgang bzw. Spritzgießvorgang) zersetzt und dabei die geschlossenen Poren 18 hinterlassen werden.

Bei einer weiteren Ausführungsform wird für das Ausgangsmaterial Holzpulver mit einem Feuchtegehalt von mindestens 5 % eingesetzt. Es ist dann kein organischer Porenbildner mehr notwendig, da durch die Desorption von gebundenem Wasser geschlossene Poren 18 herstellbar sind.

Angefeuchtetes Ausgangsmaterial kann beispielsweise dadurch hergestellt werden, dass Feuchtgranulate eingesetzt werden. Feuchtgranulate wiederum lassen sich aus trockenen Ausgangsmaterialmischungen herstellen, indem Wasser zugemischt wird und anschließend eine definierte Restfeuchte beispielsweise durch Trocknen gezielt eingestellt wird.

Bei der Herstellung des Vorkörpers 14 durch Wärmebeaufschlagung wird das adsorptiv gebundene Wasser in dem cellulosehaltigen Pulver desorbiert. Insbesondere erfolgt eine Desorption in einer Aufheizphase einer Presse, in welcher der Vorkörper 14 hergestellt wird. Die Desorption muss vor dem Aushärten des Bindemittels erfolgen. Durch den steigenden Dampfdruck bei steigender Temperatur wird das sich ausdehnende Gas, nämlich der Wasserdampf, in der umgebenden viskosen Bindemittelmatrix eingeschlossen und es kommt zur Porenbildung. Der Dampfdruck beträgt beispielsweise bei 25°C 32 mbar, bei 80°C 473 mbar und bei 150°C 4,76 bar.

Die Verfahrensführung ist derart, dass die Gasbildung (Wasserdampfbildung) und damit die Porenbildung zwischen einer Erweichungstemperatur des Bindemittels und einer Aushärtetemperatur des Bindemittels erfolgt und damit innerhalb der Topfzeit der Bindemittelmatrix erfolgt. Bei Phenolharz liegt die Erweichungstemperatur bei ca. 80°C und die Aushärtetemperatur bei ca. 150°C.

Für die Herstellung geschlossener Poren 18 ist es wichtig, dass der Bindemittelanteil genügend groß ist und insbesondere bei größer 5 % im Ausgangsmaterial liegt. Bevorzugterweise liegt der Bindemittelanteil bei 20 % bis 30 %.

Es ist dabei vorgesehen, dass die geschlossenen Poren 18 eine Größe im Bereich zwischen 10 µm und 5 mm aufweisen.

Der Vorkörper 14 weist zusätzlich zu den geschlossenen Poren 18 auch eine offene Porosität auf. Die gesamte offene Porosität an einer Oberfläche 20 des Vorkörpers 14 sollte im Bereich zwischen 5 % und 30 Flächen-% betragen.

Die offenen Poren sind später mit Carbidbildner infiltrierbar, während die geschlossenen Poren 18 nicht infiltrierbar sind.

Der Kontaktkörper 10 kann so hergestellt werden, dass er ein gradiertes Dichteprofil aufweist. Dies ist in der EP 1 657 227 A1 beschrieben, auf die ausdrücklich Bezug genommen wird. Durch Gradierung des Dichteprofils lassen sich gezielt in bestimmten Bereichen des herzustellenden Kontaktkörpers 10 unterschiedliche Keramikanteile einstellen. Insbesondere lässt sich eine Oberflächenschicht 22 an dem carbidkeramischen Kontaktkörper 10 ausbilden, welcher im Vergleich zu einem Kernbereich 24 einen erhöhten Keramikgehalt aufweist. Dazu wird eine erhöhte Dichte in dem oberflächennahen Bereich 16 des Vorkörpers 14 hergestellt.

Diese erhöhte Dichte wird beispielsweise mittels entsprechender Zusammensetzung des Ausgangsmaterials eingestellt oder über Beeinflussung des Verdichtungswiderstands (siehe EP 1 657 227 A1).

Der hergestellte Vorkörper 14 wird pyrolysiert. Bei der Pyrolyse wird der Vorkörper 14 unter Luftabschluss und insbesondere in einer Inertgasatmosphäre (wie beispielsweise Stickstoffatmosphäre) aufgeheizt. Vorzugsweise wird die Pyrolyse unter Normaldruck durchgeführt. Die Pyrolyse des Vorkörpers 14 erfolgt mindestens bis zu derjenigen Temperatur, bei der die Carbidbildnerinfiltration stattfindet.

Es kann dabei auch eine Graphitierung des Vorkörpers 14 bis zu einer Maximaltemperatur von ca. 2800°C vorgesehen sein, wenn Restkohlenstoff erhalten bleibt und sich nicht vollständig mit dem Carbidbildner - nach der Carbidbildnerinfiltration - zu Carbid umsetzt.

Durch die Pyrolyse wird aus dem Vorkörper 14 ein Kohlenstoffkörper hergestellt, welcher eine offene Porosität aufweist. Die geschlossenen Poren 18 bleiben im Wesentlichen erhalten. Die Porosität in dem Kohlenstoffkörper ist gradiert. In einer Oberflächenschicht hat man eine hohe Porosität, während die Porosität in einem Kernbereich niedriger ist. Die Oberflächenschicht bildet dann die Oberflächenschicht 22 des carbidkeramischen Kontaktkörpers 10 und der Kernbereich bildet dann den Kernbereich 24 des carbidkeramischen Kontaktkörpers 10.

Es erfolgt dann die Keramisierung über Carbidbildnerinfiltration. Kohlenstoff reagiert mit dem Carbidbildner zu Carbid. Wenn als Carbidbildner Silicium eingesetzt wird, dann bildet sich Siliciumcarbid. Die offenen Poren werden bei der Carbidbildnerinfiltration auch mit dem Carbidbildner ausgefüllt. Restkohlenstoff in der Form von Kohlenstofffasern oder Graphit/Kohlenstoffpartikeln ist dabei fein verteilt.

Bei der Carbidbildnerinfiltration kann dem Carbidbildner auch ein metallisches Material und insbesondere Kupfer zugesetzt werden. Dadurch erhält man eine Kupferphase in dem carbidkeramischen Kontaktkörper 10, durch welche dieser vorteilhafte Eigenschaften aufweist.

Es ist dabei vorgesehen, dass der Kupferanteil in einer Ausgangslegierung, mittels welcher die Carbidbildnerinfiltration durchgeführt wird, mindestens 30 Massen-% beträgt.

Es können auch Zusätze von Magnesium, Aluminium, Zinn oder Zink zur Schmelzpunkterniedrigung und zur Senkung des Viskosität bei der Carbidbildnerinfiltration verwendet werden. Bei der Verwendung solcher Zusätze bilden sich Mischphasen aus, die vorteilhafte Eigenschaften aufweisen können.

Die Carbidbildnerinfiltration wird insbesondere bei einem Druck kleiner 10 mbar und insbesondere kleiner 3 mbar durchgeführt oder bei einem leichten Überdruck von ca. 1030 mbar unter der Verwendung von Inertgas.

Die Prozesstemperaturen bei der Carbidbildnerinfiltration liegen über dem Schmelzpunkt der Ausgangslegierung oder um 200 K darüber.

Es ist dabei grundsätzlich auch möglich, dass vorlegierte Pulver verwendbar sind.

Das Ausgangsmaterial für die Carbidbildnerinfiltration weist als Pulver bzw. Granulat beispielsweise einen Korngrößenbereich zwischen 0,1 mm und 20 mm auf. Bevorzugt werden Korngrößen im Bereich zwischen 1 mm und 10 mm. Kleine Körner sind zu sauerstoffreich und hemmen die Durchmischung in der Schmelze und die Carbidbildnerinfiltration.

Das Angebot bzw. das Aufschmelzen des Carbidbildnermaterials (mit Kupferzusatz) erfolgt allseitig auf der Oberfläche des Kohlenstoffkörpers.

Die Masse der zugeführten Metallschmelze ist abhängig von der Porosität der Probe. Die Masse beträgt üblicherweise ca. 200 % bis 700 % bezogen auf die Masse des Kohlenstoffs im Kohlenstoffkörper.

Als Ergebnis erhält man einen carbidkeramischen Körper, aus welchem der Kontaktkörper 10 mit der Kontaktoberfläche 12 durch Oberflächenbearbeitung hergestellt wird. Die Oberflächenbearbeitung erfolgt dabei derart, dass die geschlossenen Poren 18 an der Oberflächenschicht 22 "freigelegt" werden, um eine Kontaktoberfläche 12 mit entsprechend hoher Rauhigkeit zu erhalten (Figur 2). Dadurch entstehen muldenförmige Vertiefungen 26 an der Kontaktoberfläche 12. Diese können beispielsweise Abrieb aufnehmen. Sie können auch mit einem Funktionsmedium wie Gleitmedium und/oder Korrosionsschutzmedium gefüllt werden.

Der hergestellte Kontaktkörper 10 enthält unterschiedliche Phasen: eine Kohlenstoffphase mit einem Faseranteil (an Kohlenstofffasern), eine Carbidphase, eine Carbidbildnerphase (aus nichtreagiertem Carbidbildner) und eine Kupferphase. Wenn Silicium als Carbidbildner verwendet wird, dann erhält man eine Siliciumcarbid-Phase und eine Siliciumphase. Der Kontaktkörper 10 besteht dann aus biomorphem SiC-Si-Cu-C-Verbundkeramikmaterial.

Es ist vorteilhaft, wenn der Faseranteil (insbesondere an C-Fasern) in dem hergestellten Kontaktkörper 10 größer als 20 Volumen-% ist. Vorzugsweise ist der Faseranteil größer als 30 Volumen-% und besonders bevorzugterweise größer als 40 Volumen-%. Es hat sich gezeigt, dass ein Faseranteil von 50 Volumen-% ideal ist. Der Faseranteil ist dabei so eingestellt, dass er in der Oberflächenschicht 22 geringer ist als im Kernbereich. Insbesondere erhöht sich der Faseranteil von der Oberflächenschicht 22 zu dem Kernbereich hin sukzessive. Diese Einstellung erfolgt durch entsprechende Herstellung des Ausgangsmaterials. Der Faseranteil ist dadurch im Reibbereich gering und dadurch ist die Oxidationsgefahr dort verringert.

Durch dementsprechenden Fasergehalt des carbidkeramischen Kontaktkörpers 10 ist dieser schadenstolerant und insbesondere weniger spröde und bruchempfindlich.

Die Phasenanteile betragen für die Kupferphase 10 Volumen-% bis 40 Volumen-%, für die Siliciumphase 30 Volumen-% bis 55 Volumen-%, für die Siliciumcarbidphase 5 Volumen-% bis 25 Volumen-% und für die Kohlenstoffphase 5 Volumen-% bis 15 Volumen-%. Die Ausgangslegierung für die Carbidbildnerinfiltration weist einen Massenanteil von 25 % bis 75 % an Kupfer auf.

Mit zunehmendem Anteil an Kupfer in einer Ausgangslegierung erhöht sich der Anteil an der Kupferphase im hergestellten Kontaktkörper 10 und es reduziert sich der Anteil an freiem Silicium im Verbundgefüge. Die Siliciumcarbid-Anteile und Kohlenstoffanteile sind im Wesentlichen unabhängig von dem Kupferanteil in der Ausgangslegierung.

Oberflächennahe Bereiche können bei einem gradiert aufgebauten Vorkörper (beispielsweise in einem "Holzwerkstoff"-Zustand) oder als Kohlenstoffkörper eine höhere Dichte aufweisen. Dadurch können sich an der Oberfläche Bereiche mit einem erhöhten Anteil an Siliciumcarbid durch Konvertierung von Kohlenstoff ausbilden. Die aufgrund einer höheren offenen Porosität im Probeinneren verursachte geringere Dichte kann durch die Siliciumphase und Kupferphase gefüllt werden.

Der Kontaktkörper 10 wird dabei so hergestellt, dass der Keramikanteil in der Oberflächenschicht 22 größer ist als in dem Kernbereich 24. Ferner ist der Kupferanteil im Kernbereich 24 größer als in der Oberflächenschicht 22. Weiterhin ist der Kohlenstoffanteil in dem Kernbereich 24 größer als in der Oberflächenschicht 22.

Dadurch erhält man einen Kontaktkörper 10 mit einer wirksamen Kontaktoberfläche 12, welche einen hohen Reibwert mit geringem Verschleiß aufweist.

Durch die duktile Kupferphase in dem Kernbereich 24 weist der Kontaktkörper 10 vorteilhafte Eigenschaften auf. Er ist als Ganzes weniger hart und spröde, als wenn diese Kupferphase nicht vorgesehen ist. Die Risszähigkeit (KIC-Wert) liegt zwischen ca. 3 MPam^{1/2} und 5,5 MPam^{1/2}. Die Risszähigkeit steigt mit dem Kupferphasen-Volumengehalt zur Kontaktkörpermitte hin an.

Der Kontaktkörper 10 ist insbesondere dadurch hergestellt, dass er aus einem gradierten Vorkörper 14 (welcher insbesondere durch Pressen in Endkontur hergestellt ist) hergestellt wird, wobei der Vorkörper 14 wiederum durch Verwendung von Holzpulvermischungen hergestellt wird. Für die Carbidbildnerinfiltration wird eine binäre Kupfer-Carbidbildner-Legierung eingesetzt. Die Carbidbildnerinfiltration erfolgt an einem pyrolysierten oder graphitierten Vorkörper. Der Kontaktkörper 10 weist einen erhöhten Kupferanteil in dem Kernbereich 24 außerhalb der Oberflächenschicht 22 auf.

Bei einem konkreten Ausführungsbeispiel werden Reibbeläge für Sicherheitsbremsen in Aufzügen hergestellt. Eine typische Abmessung eines solchen Reibbelags (Reibkörper) liegt bei einer Länge von ca. 60 mm bis 80 mm, einer Breite von ca. 20 mm bis 25 mm und einer Dicke von ca. 6 mm und 8 mm. Es kann dabei vorgesehen sein, dass der entsprechende Reibkörper, welcher rechteckig ist, mit mindestens zwei durchgängigen Aufnahmebohrungen versehen ist. Ferner können Quernuten vorgesehen sein, um den Schmutz von der Reibfläche (Kontaktoberfläche 12) aufnehmen und abführen zu können. Die Funktion der Quernuten kann auch durch die Vertiefungen übernommen werden. Die Vertiefungen können eine Tiefe von 0,01 mm bis 5 mm aufweisen. Solche Tiefen entsprechen den Porengrößen, wenn die Poren durch mechanische Schleifbearbeitung angeschnitten werden.

Der Vorkörper 14 wird aus einem Holzwerkstoff mittels eines metallischen Pressgesenks hergestellt. Beispielsweise wird eine Holzpulvermischung aus Pulverharz, Holzmehl und Pechfasern hergestellt und gepresst. Für eine obere Lage wird dabei eine Mischung mit einer höheren Restfeuchte von ca. 10 % verwendet, um die geschlossenen Poren 18 herzustellen.

Durch das Beheizen einer oberen Stempelfläche kann das Pressgut beim Zusammenfahren der Presse einseitig höher verdichtet werden, so dass sich in dem oberflächennahen Bereich 16 eine geringere offene Porosität ausbildet als außerhalb dieses oberflächennahen Bereichs 16. Gleichzeitig wird in diesem oberflächennahen Bereich 16 die geschlossene Porosität erzeugt.

Der hochverdichtete und gleichzeitig mit geschlossenen Poren 18 versehene oberflächennahe Bereich 16 ist für die Ausbildung der tribologisch wirksamen Kontaktoberfläche 12 an dem Kontaktkörper 10 vorgesehen.

Die Kontaktoberfläche 12 weist einen hohen Keramikanteil und Poren auf, um einen hohen Reibwert und geringen Verschleiß zu erzielen.

Der so hergestellte Vorkörper 14 wird während der nachfolgenden Pyrolyse bei ca. 1650°C mit einer Graphitplatte beschwert, um einen Verzug zu vermeiden.

Der pyrolysierte Vorkörper (Kohlenstoffkörper) ist offenporös. Er wird dann mit einer Kupfer-Silicium-Legierung mit einem Kupferanteil von 50 Massen-% infiltriert. Dadurch erhält man einen Metall-Keramik-Verbundwerkstoff mit einer duktilen Kupfermatrix. Der Kupferanteil ist dabei in dem Kernbereich 24 höher als in der Oberflächenschicht 22.

Zur Carbidbildnerinfiltration wird eine Mischung aus Kupfergranulat mit einer Korngröße von ca. 1 mm bis 10 mm und Siliciumgranulat mit einer Korngröße von ca. 1 mm für jedes Bauteil eingewogen und gleichmäßig um den Kohlenstoffkörper positioniert.

Der hergestellte Kontaktkörper 10 weist eine chemische Zusammensetzung mit Kupfer, Siliciumcarbid und Restsilicium sowie Pechfasern auf, wobei von der Oberfläche zu dem Kernbereich 24 (Bauteilmitte) hin der Siliciumcarbid-Keramikanteil abnimmt und der duktile Kupferanteil zunimmt.

Durch mechanisches Bearbeiten der Oberfläche werden die Infiltrationsrückstände entfernt und die offenen Poren freigelegt und dadurch die Kontaktoberfläche 12 hergestellt.

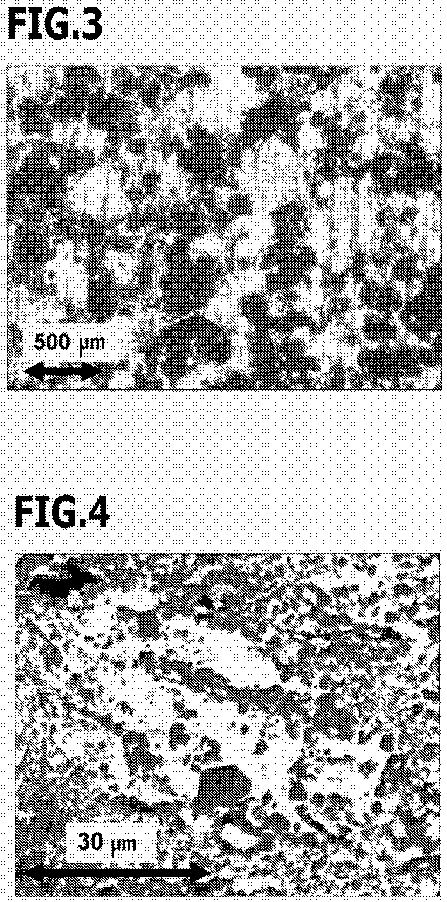

In Figur 3 ist ein Anschliff einer Kontaktoberfläche im Auflichtmikroskop mit 40-facher Vergrößerung eines Ausführungsbeispiels eines erfindungsgemäßen Kontaktkörpers 10 gezeigt. Die hellen Phasen sind durch Si, SiC und die Kupferphase η gebildet. Die dunklen Phasen sind offene Poren und Restkohlenstoffgebilde. Die Porengröße beträgt bis ca. 500 µm.

Die angegebene Längenskala ist 500 µm.

In Figur 4 ist eine rasterelektronenmikroskopische Aufnahme eines Anschliffs einer Kontaktoberfläche eines erfindungsgemäßen Kontaktkörpers 10 mit 2000-facher Vergrößerung gezeigt. Es wurde dabei ein nahezu porenfreier Bereich untersucht, entsprechend einer hellen Phase gemäß Figur 3. Die Phasenverteilung beträgt in Flächenprozent: 50 %-iger Anteil der Kupferphase η, 48 %-iger Anteil von Si und SiC und 2 %-iger Anteil an Restkohlenstoff und Poren.

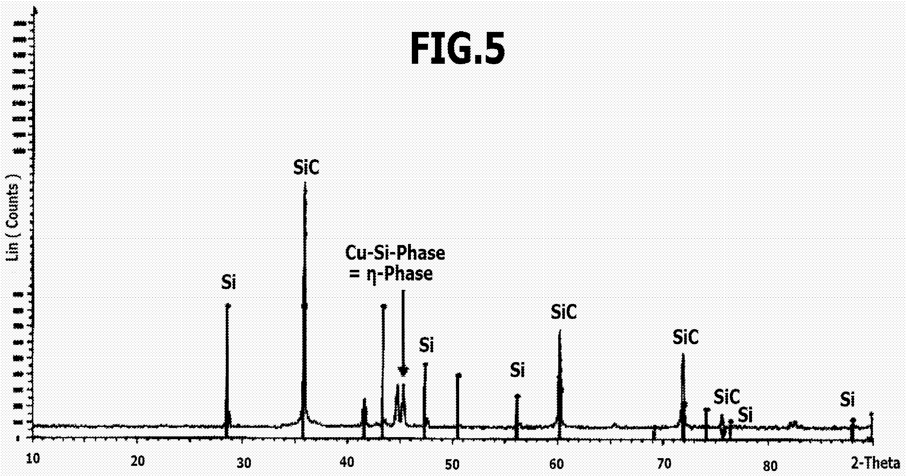

In Figur 5 ist eine Diffraktometeraufnahme eines oberflächennahen Bereichs 16 an der Kontaktoberfläche 12 gezeigt. Es sind dabei die Messsignale für die Siliciumcarbid-Phase, die Siliciumphase und die η-Kupferphase gezeigt.

Der entsprechende carbidkeramische Kontaktkörper, welcher in den Figuren 3 und 4 gezeigt und von welchem die Diffraktometeraufnahme gemäß Figur 5 gemacht wurde, ist eine biomorphe Verbundkeramikprobe, wobei der pyrolysierte biomorphe Kohlenstoffkörper mit einer Cu50Si50-Legierung drucklos über die Schmelzphase infiltriert wurde.

## Patentansprüche

1. Verfahren zur Herstellung eines carbidkeramischen Kontaktkörpers, welcher eine Kontaktoberfläche aufweist, bei welchem ein Vorkörper hergestellt wird, aus dem Vorkörper durch Pyrolyse und/oder Graphitierung ein offenporöser Kohlenstoffkörper hergestellt wird und der Kohlenstoffkörper durch Carbidbildnerinfiltration keramisiert wird,
**dadurch gekennzeichnet , dass** ein Ausgangsmaterial für den Vorkörper ein Bindemittel umfasst und der Bindemittelanteil im Ausgangsmaterial für den Vorkörper größer 5 % ist, dass das Ausgangsmaterial mindestens bereichsweise einen Porenbildner umfasst, dass der Vorkörper so hergestellt wird, dass er in einem oberflächennahen Bereich, an welchem die Kontaktoberfläche gebildet wird, geschlossene Poren aufweist, die bei der Pyrolyse erhalten bleiben und die nicht durch Carbidbildner infiltrierbar sind, und dass eine mechanische Bearbeitung eines hergestellten Kontaktkörpers im Bereich der geschlossenen Poren zur Herstellung der Kontaktoberfläche erfolgt, wobei Poren freigelegt werden.

2. Verfahren nach Anspruch 1, **dadurch gekennzeichnet, dass** die geschlossenen Poren in dem Vorkörper in einer Bindemittelmatrix eingeschlossen sind.

3. Verfahren nach Anspruch 1 oder 2, **dadurch gekennzeichnet, dass** die geschlossenen Poren eine Größe zwischen 10 µm und 5 mm aufweisen.

4. Verfahren nach einem der vorangehenden Ansprüche, **dadurch gekennzeichnet, dass** der Vorkörper durch Warmpressen oder Spritzgießen des Ausgangsmaterials hergestellt wird.

5. Verfahren nach einem der vorangehenden Ansprüche, **dadurch gekennzeichnet, dass** das Ausgangsmaterial für den Vorkörper cellulosehaltiges Pulver umfasst.

6. Verfahren nach einem der vorangehenden Ansprüche, **dadurch gekennzeichnet, dass** das Ausgangsmaterial für den Vorkörper Fasern umfasst.

7. Verfahren nach Anspruch 6, **dadurch gekennzeichnet, dass** der Faseranteil größer als 20 Volumen-% beträgt.

8. Verfahren nach Anspruch 6 oder 7, **dadurch gekennzeichnet, dass** der Faseranteil von der Kontaktoberfläche weg ansteigt.

9. Verfahren nach einem der vorangehenden Ansprüche, **dadurch gekennzeichnet, dass** der Porenbildner so gewählt wird, dass er sich während einer Topfzeit bei der Herstellung des Vorkörpers zersetzt.

10. Verfahren nach einem der Ansprüche 5 bis 9, **dadurch gekennzeichnet, dass** das cellulosehaltige Pulver im Ausgangsmaterial mindestens bereichsweise einen Feuchtegehalt größer 5 % aufweist.

11. Verfahren nach Anspruch 10, **dadurch gekennzeichnet, dass** der Feuchtegehalt durch Trocknen von angefeuchtetem cellulosehaltigen Pulver oder einem angefeuchteten Gemisch, welches cellulosehaltiges Pulver enthält, eingestellt wird.

12. Verfahren nach einem der vorangehenden Ansprüche, **dadurch gekennzeichnet, dass** der Vorkörper so hergestellt wird, dass die Porenbildung der geschlossenen Poren zwischen einer Erweichungstemperatur und einer Aushärtetemperatur des Bindemittels erfolgt.

13. Verfahren nach Anspruch 12, **dadurch gekennzeichnet, dass** eine Gasbildung zur Herstellung geschlossener Poren zwischen der Erweichungstemperatur und der Aushärtetemperatur des Bindemittels erfolgt.

14. Verfahren nach einem der vorangehenden Ansprüche, **dadurch gekennzeichnet, dass** der Bindemittelanteil zwischen 20 % und 30 % liegt.

15. Verfahren nach einem der vorangehenden Ansprüche, **dadurch gekennzeichnet, dass** der Vorkörper mit gradiertem Dichteprofil hergestellt wird.

16. Verfahren nach Anspruch 15, **dadurch gekennzeichnet, dass** zur Herstellung des Vorkörpers Ausgangsmaterial geschichtet wird, wobei das Ausgangsmaterial in einem oberflächennahen Bereich zur Ausbildung geschlossener Poren behandelt ist.

17. Verfahren nach Anspruch 15 oder 16, **dadurch gekennzeichnet, dass** das Dichteprofil so gewählt wird, dass die Kohlenstoffdichte nach der Pyrolyse in einem oberflächennahen Bereich bezogen auf die spätere Kontaktoberfläche größer ist als in einem Kernbereich.

18. Verfahren nach einem der vorangehenden Ansprüche, **dadurch gekennzeichnet, dass** der Vorkörper mit geschlossenen Poren und offenen Poren in dem oberflächennahen Bereich hergestellt wird.

19. Verfahren nach Anspruch 18, **dadurch gekennzeichnet, dass** die geschlossene Porosität in dem oberflächennahen Bereich zwischen 5 Flächen-% und 60 Flächen-% liegt.

20. Verfahren nach einem der vorangehenden Ansprüche, **dadurch gekennzeichnet, dass** eine Carbidbildnerinfiltration mit Silicium durchgeführt wird.

21. Verfahren nach einem der vorangehenden Ansprüche, **dadurch gekennzeichnet, dass** Kupfer als Bestandteil des Infiltrationsmaterials verwendet wird.

22. Verfahren nach Anspruch 21, **dadurch gekennzeichnet, dass** der Kupferanteil in einer Ausgangslegierung für die Infiltration mindestens 15 Massen-% beträgt.

23. Carbidkeramischer Kontaktkörper, hergestellt nach dem Verfahren gemäß Anspruch 21, umfassend eine carbidkeramische Oberflächenschicht (22) mit einer Kontaktoberfläche (12), einen Kernbereich (24), und eine Kupferphase in der Oberflächenschicht (22) und dem Kernbereich (24), wobei der Keramikanteil in der Oberflächenschicht (22) größer ist als in dem Kernbereich (24), der Kupferanteil in dem Kernbereich (24) größer ist als in der Oberflächenschicht (22) und die carbidkeramische Oberflächenschicht (22) durch mechanische Bearbeitung einer carbidkeramischen Oberflächenschicht mit geschlossenen Poren (18) hergestellt ist, wobei Vertiefungen (26) an einer Kontaktoberfläche (12) vorliegen.

24. Carbidkeramischer Kontaktkörper nach Anspruch 23, **dadurch gekennzeichnet, dass** ein Faseranteil im Kernbereich (24) größer ist als in der Oberflächenschicht (22).

25. Carbidkeramischer Kontaktkörper nach Anspruch 24, **dadurch gekennzeichnet, dass** der Faseranteil von der Oberflächenschicht (22) zum Kernbereich (24) sukzessive ansteigt.

26. Carbidkeramischer Kontaktkörper nach einem der Ansprüche 23 bis 25, **dadurch gekennzeichnet, dass** ein Faseranteil mindestens 20 Volumen-% beträgt.

27. Carbidkeramischer Kontaktkörper nach einem der Ansprüche 23 bis 26, **dadurch gekennzeichnet, dass** keine Fasern und/oder kein Kohlenstoff an der Oberfläche vorliegt.

28. Carbidkeramischer Kontaktkörper nach einem der Ansprüche 23 bis 27, **dadurch gekennzeichnet, dass** in Vertiefungen (26) ein Funktionsmedium angeordnet ist.

29. Carbidkeramischer Kontaktkörper nach einem der Ansprüche 23 bis 28, **gekennzeichnet durch** eine Kupferphase mit einem Volumenanteil von 10 % bis 40 %, eine Siliciumphase mit einem Volumenanteil von 30 % bis 55 %, eine Siliciumcarbidphase mit einem Volumenanteil von 5 % bis 25 % und eine Kohlenstoffphase mit einem Volumenanteil von 5 % bis 15 %.

30. Carbidkeramischer Kontaktkörper nach Anspruch 29, **dadurch gekennzeichnet, dass** ein Massenanteil von Kupfer einer Ausgangslegierung zur Carbidbildung 25 % bis 75 % beträgt.

31. Carbidkeramischer Kontaktkörper nach einem der Ansprüche 23 bis 30, **gekennzeichnet durch** eine Ausbildung als Reibkörper oder Gleitkörper.

## Claims

1. A method for producing a carbide ceramic contact body which has a contact surface, in which a preform is produced, from the preform an open-porous carbon body is produced by pyrolysis and/or graphitization, and the carbon body is ceramized by carbide former infiltration,
**characterized in that** a starting material for the preform comprises a binder and the binder content in the starting material for the preform is greater than 5%, **in that** the starting material comprises a pore former at least in regions, **in that** the preform is produced such that it has closed pores in a near-surface region at which the contact surface is formed, the closed pores being preserved upon pyrolysis and not being infiltratable by carbide former, and **in that** a mechanical processing of a produced contact body occurs in the region of the closed pores for the production of the contact surface, wherein pores become exposed.

2. The method according to Claim 1, **characterized in that** the closed pores in the preform are enclosed in a binder matrix.

3. The method according to either of Claims 1 or 2, **characterized in that** the closed pores have a size between 10 µm and 5 mm.

4. The method according to any one of the preceding claims, **characterized in that** the preform is produced by hot pressing or injection molding of the starting material.

5. The method according to any one of the preceding claims, **characterized in that** the starting material for the preform comprises cellulose-containing powder.

6. The method according to any one of the preceding claims, **characterized in that** the starting material for the preform comprises fibers.

7. The method according to Claim 6, **characterized in that** the fiber content is greater than 20% by volume.

8. The method according to either of Claims 6 or 7, **characterized in that** the fiber content increases away from the contact surface.

9. The method according to any one of the preceding claims, **characterized in that** the pore former is selected such that it decomposes during a pot life in the production of the preform.

10. The method according to any one of Claims 5 to 9, **characterized in that** the cellulose-containing powder in the starting material has a moisture content of greater than 5% at least in regions.

11. The method according to Claim 10, **characterized in that** the moisture content is adjusted by drying moistened cellulose-containing powder or a moistened mixture which contains cellulose-containing powder.

12. The method according to any one of the preceding claims, **characterized in that** the preform is produced such that the pore formation of the closed pores occurs between a softening temperature and a hardening temperature of the binder.

13. The method according to Claim 12, **characterized in that** a gas formation for the production of closed pores occurs between the softening temperature and the hardening temperature of the binder.

14. The method according to any one of the preceding claims, **characterized in that** the binder content is between 20% and 30%.

15. The method according to any one of the preceding claims, **characterized in that** the preform is produced with a graduated density profile.

16. The method according to Claim 15, **characterized in that** starting material is layered for the production of the preform, wherein the starting material is treated in a near-surface region for the formation of closed pores.

17. The method according to either of Claims 15 or 16, **characterized in that** the density profile is selected such that the carbon density after pyrolysis is greater in a near-surface region with respect to the later contact surface than in a core region.

18. The method according to any one of the preceding claims, **characterized in that** the preform is produced with closed pores and open pores in the near-surface region.

19. The method according to Claim 18, **characterized in that** the closed porosity in the near-surface region is between 5% by area and 60% by area.

20. The method according to any one of the preceding claims, **characterized in that** a carbide former infiltration is carried out with silicon.

21. The method according to any one of the preceding claims, **characterized in that** copper is used as a constituent of the infiltration material.

22. The method according to Claim 21, **characterized in that** the copper content in a starting alloy for the infiltration is at least 15% by mass.

23. A carbide ceramic contact body, produced according to the method in accordance with Claim 21, comprising a carbide ceramic surface layer (22) with a contact surface (12), a core region (24), and a copper phase in the surface layer (22) and the core region (24), wherein the ceramic content in the surface layer (22) is greater than in the core region (24), the copper content in the core region (24) is greater than in the surface layer (22), and the carbide ceramic surface layer (22) is produced by mechanical processing of a carbide ceramic surface layer with closed pores (18), wherein recesses (26) are present at a contact surface (12).

24. The carbide ceramic contact body according to Claim 23, **characterized in that** a fiber content in the core region (24) is greater than in the surface layer (22).

25. The carbide ceramic contact body according to Claim 24, **characterized in that** the fiber content successively increases from the surface layer (22) to the core region (24).

26. The carbide ceramic contact body according to any one of Claims 23 to 25, **characterized in that** a fiber content is at least 20% by volume.

27. The carbide ceramic contact body according to any one of Claims 23 to 26, **characterized in that** no fibers and/or no carbon is present at the surface.

28. The carbide ceramic contact body according to any one of Claims 23 to 27, **characterized in that** a functional medium is arranged in recesses (26).

29. The carbide ceramic contact body according to any one of Claims 23 to 28, **characterized by** a copper phase with a volume fraction of 10% to 40%, a silicon phase with a volume fraction of 30% to 55%, a silicon carbide phase with a volume fraction of 5% to 25%, and a carbon phase with a volume fraction of 5% to 15%.

30. The carbide ceramic contact body according to Claim 29, **characterized in that** a mass fraction of copper in a starting alloy for carbide formation is 25% to 75%.

31. The carbide ceramic contact body according to any one of Claims 23 to 30, **characterized by** a formation as a friction body or sliding body.

## Revendications

1. Procédé de fabrication d'un corps de contact en céramique à base de carbure présentant une surface de contact, dans lequel on fabrique une préforme à partir de laquelle on fabrique un corps en carbone à porosité ouverte par pyrolyse et/ou graphitation et on céramise le corps en carbone par infiltration d'un générateur de carbure, **caractérisé en ce qu'**un matériau de départ destiné à la préforme comporte un liant et la proportion de liant dans le matériau de départ destiné à la préforme est supérieure à 5 %, **en ce que** le matériau de départ comporte, du moins dans certaines zones, un agent porogène, **en ce que** la préforme est fabriquée de manière à présenter, dans une zone proche de la surface, sur laquelle la surface de contact est formée, des pores fermés conservés lors de la pyrolyse et ne pouvant pas être infiltrés par des générateurs de carbure, et **en ce qu'**un corps de contact fabriqué est soumis à un usinage mécanique dans la zone des pores fermés afin de réaliser la surface de contact, lors duquel les pores sont mis à jour.

2. Procédé selon la revendication 1, **caractérisé en ce que** les pores fermés dans la préforme sont enfermés dans une matrice de liant.

3. Procédé selon la revendication 1 ou la revendication 2, **caractérisé en ce que** les pores fermés mesurent entre 10 µm et 5 mm.

4. Procédé selon l'une quelconque des revendications précédentes, **caractérisé en ce que** la préforme est fabriquée par pressage à chaud ou moulage par injection du matériau de départ.

5. Procédé selon l'une quelconque des revendications précédentes, **caractérisé en ce que** le matériau de départ destiné à la préforme comprend une poudre contenant de la cellulose.

6. Procédé selon l'une quelconque des revendications précédentes, **caractérisé en ce que** le matériau de départ destiné à la préforme comprend des fibres.

7. Procédé selon la revendication 6, **caractérisé en ce que** la proportion de fibres est supérieure à 20 % en volume.

8. Procédé selon la revendication 6 ou la revendication 7, **caractérisé en ce que** la proportion de fibres augmente en s'éloignant de la surface de contact.

9. Procédé selon l'une quelconque des revendications précédentes, **caractérisé en ce que** l'agent porogène est choisi de manière à se décomposer pendant une durée de vie en pot lors de la fabrication de la préforme.

10. Procédé selon l'une quelconque des revendications 5 à 9, **caractérisé en ce que** la poudre, contenant de la cellulose, dans le matériau de départ présente, du moins dans certaines zones, une teneur en humidité supérieure à 5 %.

11. Procédé selon la revendication 10, **caractérisé en ce que** la teneur en humidité est ajustée en séchant la poudre contenant de la cellulose humidifiée ou bien un mélange humidifié contenant de la poudre contenant de la cellulose.

12. Procédé selon l'une quelconque des revendications précédentes, **caractérisé en ce que** la préforme est fabriquée de manière à ce que la formation des pores fermés a lieu entre une température de ramollissement et une température de durcissement du liant.

13. Procédé selon la revendication 12, **caractérisé en ce qu'**une formation de gaz a lieu en vue de la fabrication de pores fermés entre la température de ramollissement et la température de durcissement du liant.

14. Procédé selon l'une quelconque des revendications précédentes, **caractérisé en ce que** la proportion de liant est comprise entre 20 % et 30 %.

15. Procédé selon l'une quelconque des revendications précédentes, **caractérisé en ce que** la préforme est fabriquée avec un profil de densité gradué.

16. Procédé selon la revendication 15, **caractérisé en ce que** le matériau de départ destiné à la fabrication de la préforme est stratifié, le matériau de départ étant traité dans une zone proche de la surface en vue de la formation de pores fermés.

17. Procédé selon la revendication 15 ou la revendication 16, **caractérisé en ce que** le profil de densité est choisi de telle sorte que la densité de carbone après la pyrolyse dans une zone proche de la surface par rapport à la future surface de contact est supérieure à celle d'une zone centrale.

18. Procédé selon l'une quelconque des revendications précédentes, **caractérisé en ce que** la préforme fabriquée comporte des pores fermés et des pores ouverts dans la zone proche de la surface.

19. Procédé selon la revendication 18, **caractérisé en ce que** la porosité fermée dans la zone proche de la surface est comprise entre 5 % en surface et 60 % en surface.

20. Procédé selon l'une quelconque des revendications précédentes, **caractérisé en ce qu'**une infiltration d'un générateur de carbure avec du silicium est réalisée.

21. Procédé selon l'une quelconque des revendications précédentes, **caractérisé en ce qu'**on utilise du cuivre comme élément constitutif du matériau d'infiltration.

22. Procédé selon la revendication 21, **caractérisé en ce que** la proportion de cuivre dans un alliage de départ destiné à l'infiltration est au moins égale à 15 % en masse.

23. Corps de contact en céramique à base de carbure, fabriqué d'après le procédé selon la revendication 21, comprenant une couche superficielle (22) en céramique à base de carbure dotée d'une surface de contact (12), d'une zone centrale (24) et d'une phase cuivre dans la couche superficielle (22) et la zone centrale (24), la proportion de céramique dans la couche superficielle (22) étant supérieure à celle dans la zone centrale (24), la proportion de cuivre dans la zone centrale (24) étant supérieure à celle dans la couche supérieure (22) et la couche superficielle (22) en céramique à base de carbure étant fabriquée par usinage mécanique d'une couche superficielle en céramique à base de carbure à pores fermés (18), des creux (26) étant présents sur une surface de contact (12) .

24. Corps de contact en céramique à base de carbure selon la revendication 23, **caractérisé en ce que** la proportion de fibres dans la zone centrale (24) est supérieure à celle dans la couche superficielle (22) .

25. Corps de contact en céramique à base de carbure selon la revendication 24, **caractérisé en ce que** la proportion de fibres augmente progressivement depuis la couche superficielle (22) vers la zone centrale (24).

26. Corps de contact en céramique à base de carbure selon l'une quelconque des revendications 23 à 25, **caractérisé en ce que** la proportion de fibres est au moins égale à 20 % en volume.

27. Corps de contact en céramique à base de carbure selon l'une quelconque des revendications 23 à 26, **caractérisé en ce qu'**il n'y a aucune fibre et/ou pas de carbone à la surface.

28. Corps de contact en céramique à base de carbure selon l'une quelconque des revendications 23 à 27, **caractérisé en ce qu'**un fluide fonctionnel est disposé dans des creux (26).

29. Corps de contact en céramique à base de carbure selon l'une quelconque des revendications 23 à 28, **caractérisé par** une phase cuivre ayant une fraction volumique de 10 % à 40 %, une phase silicium ayant une fraction volumique de 30 % à 55 %, une phase carbure de silicium ayant une fraction volumique de 5 % à 25 % et une phase carbone ayant une phrase volumique de 5 % à 15 %.

30. Corps de contact en céramique à base de carbure selon la revendication 29, **caractérisé en ce que** la fraction massique du cuivre d'un alliage de départ destiné à la formation de carbure est de 25 % à 75 %.

31. Corps de contact en céramique à base de carbure selon l'une quelconque des revendications 23 à 30, **caractérisé en ce qu'**il est conçu comme corps de friction ou de corps coulissant.
